# EUROPEAN PATENT SPECIFICATION

(11) **EP 2 406 146 B1**
(45) Date of publication and mention of the grant of the patent: **21.08.2013**
(21) Application number: 10722381.0
(22) Date of filing: 09.03.2010
(51) Int. Cl.: B65D 63/16

(54) **SECURING CARGO**
SICHERUNG VON FRACHT
FIXATION DE CHARGEMENT

(30) Priority: 10.03.2009 GB 0904065
(43) Date of publication of application: 18.01.2012
(73) Proprietor: Stockham, Nigel Geoffrey, West Midlands WS1 2BT (GB); Wigfield, Paul, West Midlands WS1 2BT (GB)
(72) Inventor: Stockham, Nigel Geoffrey, West Midlands WS1 2BT (GB); Wigfield, Paul, West Midlands WS1 2BT (GB)
(74) Representative: Swindell & Pearson Limited
(86) International application number: PCT/GB2010/000422
(87) International publication number: WO 2010/103268

(56) References cited:
- EP-A2- 1 134 165
- US-A- 1 778 366
- US-A- 3 349 444

## Description

The present invention relates to methods and apparatus for securing cargo.

Many situations arise in which there is a requirement to secure cargo by means of straps. In some circumstances, metal straps may be used under tension, with a seal device to hold the ends of the strap together. Metal straps have the disadvantage that when cut under tension, the cut ends may whip away from the cargo, as the tension is released, presenting a danger to personnel.

In an alternative, extruded or woven straps such as polyester or another synthetic plastic material are used with buckles. These straps have a reduced tendency to whip when cut under tension, and are less dangerous if they do, but it is found that the tension which can be achieved with known plastic strap and buckle arrangements is less than with known metal strap arrangements, resulting in a less secure hold on the cargo.

US 3349444 describes a metal buckle formed in a geometry which develops increased frictional holding power against strap pull out. The buckle may be surface-roughened and thereafter surface-coated to increase its frictional properties. EP 1134165 describes a metal strap buckle treated with a hardening process and finished with a dry phosphate coating to prevent slippage.

Examples of the present invention provide a buckle for a flexible cargo strap, comprising:
at least one surface against which the strap bears, in use, and wherein the surface is coated in a grit material.

The coated surface may have an adhesive coating by which the grit material is secured to the coated surface. The adhesive coating may be a water-based adhesive. Alternatively, the coated surface may be coated by an abrasive coating containing grit material.

The grit material may be an abrasive grit. The grit material may be tungsten carbide, diamond, crushed glass, sand, silica powder, aluminium oxide, pumice or iron oxide.

The coated surface may be provided by the surface of a length of metal rod. The metal rod may be bent to form the buckle. The metal rod may be steel.

The buckle may comprise:
a first surface around which a working end of the strap is wrapped, in use, and
a second surface against which the working end is pressed, in use, by tension in the bight of the strap,
one or both of the first and second surfaces being coated in grit material, as aforesaid.

The buckle may further comprise a third surface corresponding with the first surface, for the other working end of the strap, and a fourth surface corresponding with the second surface, against which the other working end is pressed, in use, and wherein one or both of the third and fourth surfaces are coated in grit material, as aforesaid.

Examples of the present invention also provide a cargo strapping arrangement comprising a flexible cargo strap for passing around the cargo, and a buckle as defined in any of the preceding definitions, for securing the ends of the cargo strap together.

Examples of the present invention also provide a cargo strapping arrangement comprising a flexible cargo strap around a cargo, and a buckle as defined in any of the preceding definitions, the buckle securing the ends of the cargo strap together.

The strap may be woven or extruded and may be a synthetic plastic material.

Examples of the present invention also provide a buckle for a flexible cargo strap, comprising at least one abrasive surface against which the strap bears, in use.

Examples of the present invention will now be described in more detail, by way of example only, and with reference to the accompanying drawings, in which:
Figure 1 is a simplified perspective view of a cargo secured by a strap and buckle arrangement of one example of the present invention;
Figure 2 shows the part of Figure 1 labelled "2", on an enlarged scale;
Figures 3, 4 and 5 are perspective, plan and side views, respectively, of the buckle shown in use in Figures 1 and 2, Fig. 3 being on an enlarged scale; and
Figure 6 is a side view of the buckle, in use with a strap.

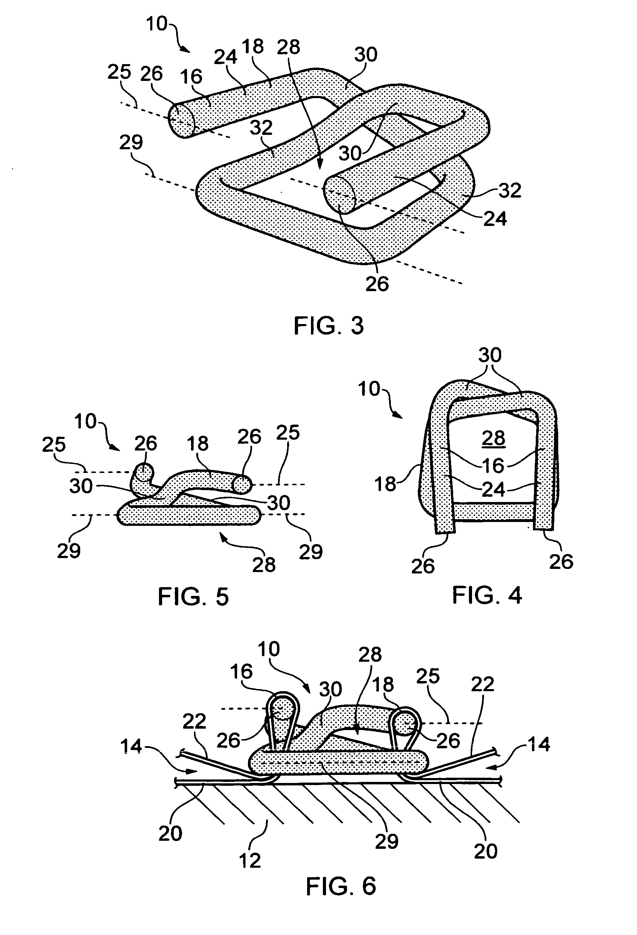

The drawings illustrate a buckle 10 being used to secure a cargo 12 by means of a flexible cargo strap 14 which extends around the cargo 12. As will be described in more detail below, the buckle 10 has at least one surface 16 (Figure 3) against which the strap 14 bears, in use. The surface 16 is abrasive, in this example. The surface 16 is coated in a grit material 18, in this example.

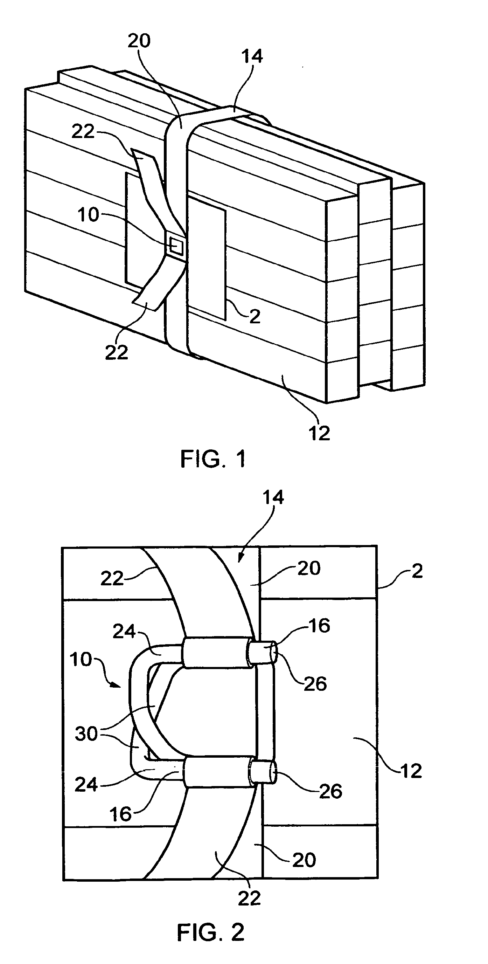

In more detail, the cargo 12 illustrated in Figure 1 is a bundle of elongate items. The cargo strap 14 extends around the cargo 12. The bight 20 of the strap 14 is held in position around the cargo 12 by securing together the free or working ends 22 of the strap 14 by means of the buckle 10. This can be seen particularly in Figures 2 and 6. The working ends 22 follow a convoluted path around elements of the buckle 10 to create friction between the working ends 22 and the buckle 10. This friction serves to hold the bight 20 under tension.

In the example being described, both ends of the strap 14 are used as working ends 22 for engagement with the buckle 10 in similar manner. Alternatively, one end may be secured permanently to the buckle 10, leaving only a single working end 12 for threading through the buckle 10, after the bight 20 has been passed around the cargo 12.

The buckle 10 is formed from a length of rod or bar bent into a loop of generally square or rectangular form. The material of the buckle 10 may be a steel, such as bright drawn mild steel. The buckle 10 has two terminal arms 24 which extend generally parallel to each other, to the extreme ends 26. The terminal arms 24 therefore define a plane 25, indicated in Figure 5. Between the terminal arms 24, the buckle is bent to form a generally square or rectangular loop 28 in a second plane 29. The ends of the loop 28 are connected with the terminal arms 24 by sloping portions 30. The plane of the terminal arms 24 is spaced slightly from the plane of the loop 28. The loop 28 has two generally straight side portions 32 running generally parallel with, and slightly spaced from respective terminal arms 24.

Grit material 18 is coated onto various surfaces of the buckle 10, as has been described. In this example, grit material 18 is coated onto the terminal arms 24. Grit material 18 is also coated onto the side portions 32. In each case, grit material 18 is preferably coated around substantially the whole circumference of the arm 24 or portion 32, and along substantially the whole length of the arm 24 or portion 32.

In this example, the coated surfaces have an adhesive coating by which the grit material is secured to the coated surface. In this example, the adhesive coating is a water-based adhesive. Other adhesive materials may be used. The grit material may be an abrasive grit. The grit material may be tungsten carbide, diamond, crushed glass, sand, silica powder, aluminium oxide, pumice or iron oxide. An abrasive coating containing grit material may be applied to the surface to be rendered abrasive, for example by applying a paint into which the grit has been introduced.

When the strapping arrangement is used, each working end 22 of the strap 14 is threaded through the buckle 10 in the manner which is illustrated in Figures 2 and 6. After passing the bight 20 around the cargo 12, the working end 22 is passed between the buckle 10 and the cargo 12. The buckle 10 is positioned with the loop 28 facing the cargo 12, between the cargo 12 and the terminal arms 24. The working end 22 is then passed through the loop 28, between the terminal arms 24, around one of the terminal arms 24 and back through the loop 28. The working end 22 then passes away from the buckle 10, under the respective side portion 32. Both ends of the strap 14 may be threaded in this manner, as illustrated in Figures 2 and 6, or one end of the strap 14 may be threaded, the other being permanently attached to the buckle 10, as noted above.

Once threaded in this manner, the working end 22 can be pulled through the buckle 10 to increase the tension in the bight 20. A tensioning tool may be used for this purpose. As the bight tension increases, the bight 20 becomes pressed more tightly toward the side portion 32. This traps the working end 22 between the side portion 32 and the bight 20. The tension in the bight 20 also serves to pull the working end 22 against the terminal arm 24.

This results in friction between the working end 22 and the surface of the terminal arm 24, and further friction between the working end 22 and the side portion 32. In particular, friction will be created between the working end 22 and those regions of the terminal arms 24 which face away from the cargo 12. Further friction will be created particularly between the working end 22 and the surface of the side portion 32, particularly those regions of the side portion surface which face the cargo 12 and face inwardly of the loop 28.

It is one or more of these regions, in particular, which are coated with the grit material 18. Accordingly, this friction is enhanced by the abrasive nature of the grit material 18. We have found grit material to be compatible with extruded or woven cargo straps, particularly those made of synthetic plastics materials such as polyester, because of the tendency of the grit material to dig into the polyester. This creates good grip of the strap by the buckle, even if the strap is wet.

Tension in the bight 20 can be further increased by pulling additional lengths of the working ends 22 through the buckle 10.

In one example, the buckle 10 is manufactured by first bending a suitable length of buckle material to the required form and then dipping the buckle 10 into adhesive. After coating the buckle 10 with adhesive, it may be dipped into grit material 18, preferably in powder or granular form, to coat the buckle 10. This dipping process can readily coat the entire surface of the buckle 10 with adhesive, and therefore with grit material. We have found that this may further assist the retention of the strap 14. For example, the edges of the strap 14 may rub against the sloping portions 30, so that grit material 18 on the sloping portions 30 can provide a further contribution to the performance of the buckle 10. Similarly, the sloping portions 30 may rub against each other if the buckle 10 deforms under load and again, the presence of grit material 18 on the sloping portions 30 may further contribute to the performance of the buckle 10.

Alternatively, grit material 18 may be applied selectively to regions of the surface of the buckle 10, particularly those regions noted above as contributing to the grip of the working end 22 by the buckle 10.

Many variations modifications can be made to the apparatus described above, without departing from the scope of the invention. In particular, the shape, form, dimensions and relative dimensions of the buckle may be changed, for example to modify the grip characteristics and to accommodate different sizes of strap 14. Many different grit materials could be used in addition to those described. The grit material may be chosen, in part, with reference to the form and material of the strap with which the buckle is intended to be used. The adhesive material may be chosen, in a practical situation, to be compatible with the material of the buckle 10 and of the grit material 18.

## Claims

1. A buckle (10) for a flexible cargo strap (14), comprising:
at least one surface (16) against which the strap bears, in use, and wherein the surface is coated in a grit material (18).

2. A buckle (10) according to claim 1, wherein the coated surface (16) has an adhesive coating by which the grit material (18) is secured to the coated surface.

3. A buckle (10) according to claim 2, wherein the adhesive coating is a water-based adhesive.

4. A buckle (10) according to any preceding claim, wherein the coated surface (16) is coated by an abrasive coating containing grit material (18).

5. A buckle (10) according to any preceding claim, wherein the grit material (18) is an abrasive grit.

6. A buckle (10) according to any preceding claim, wherein the grit material is tungsten carbide, diamond, crushed glass, sand, silica powder, aluminium oxide, pumice or iron oxide.

7. A buckle (10) according to any preceding claim, wherein the coated surface (16) is provided by the surface of a length of metal rod.

8. A buckle (10) according to claim 7, wherein the metal rod is bent to form the buckle.

9. A buckle (10) according to claim 7 or 8, wherein the metal rod is steel.

10. A buckle (10) as claimed in any preceding claim, further comprising:
a first surface (16) around which a working end (22) of a flexible cargo strap (14) can be wrapped, in use, and,
a second surface (32) against which the working end can be pressed, in use, by tension in the bight of the strap,
one or both of the first and second surfaces being coated in grit material (18), as aforesaid.

11. A buckle (10) according to claim 10, wherein the buckle further comprises a third surface (16) corresponding with the first surface (16), around which the other working end of a strap can be wrapped, in use, and a fourth surface (32) corresponding with the second surface (32), against which the other working end can be pressed, in use, and wherein one or both of the third and fourth surfaces are coated in grit material (18), as aforesaid.

12. A cargo strapping arrangement, comprising:
a flexible cargo strap (14) for passing around the cargo (12),
and a buckle (10) as defined in any of the preceding claims, for securing the ends of the cargo strap together.

13. A cargo strapping arrangement according to claim 12 or 13, wherein the strap (14) is woven.

14. A cargo strapping arrangement according to claim 12 or 13, wherein the strap (14) is extruded.

15. A cargo strapping arrangement according to any of claims 12 to 15, wherein the strap (14) is a synthetic plastic material.

## Patentansprüche

1. Schnalle (10) für einen flexiblen Frachtgurt (14), welche aufweist:
mindestens eine Oberfläche (16), an welcher der Gurt im Gebrauch anliegt und wobei die Oberfläche mittels eines Kornmaterials (18) beschichtet ist.

2. Schnalle (10) nach Anspruch 1, bei welcher die beschichtete Oberfläche (16) eine Klebeschicht hat, mittels welcher das Kornmaterial (18) an der beschichteten Oberfläche befestigt ist.

3. Schnalle (10) nach Anspruch 2, bei welcher die Klebeschicht ein Klebstoff auf Wasserbasis ist.

4. Schnalle (10) nach einem der vorhergehenden Ansprüche, bei welcher die beschichtete Oberfläche (16) mittels einer Kornmaterial (18) enthaltenden abrasiven Beschichtung beschichtet ist.

5. Schnalle (10) nach einem der vorhergehenden Ansprüche, bei welcher das Kornmaterial (18) abrasives Korn ist.

6. Schnalle (10) nach einem der vorhergehenden Ansprüche, bei welcher das Kornmaterial Wolframkarbid, Diamant, zerkleinertes Glas, Sand, Siliziumdioxid-Pulver, Aluminiumoxid, Bimsstein oder Eisenoxid ist.

7. Schnalle (10) nach einem der vorhergehenden Ansprüche, bei welcher die beschichtete Oberfläche (16) durch die Oberfläche einer gewissen Länge einer Metallstab gebildet ist.

8. Schnalle (10) nach Anspruch 7, bei welcher die Metallstab zur Bildung der Schnalle gebogen ist.

9. Schnalle (10) nach Anspruch 7 oder 8, bei welcher die Metallstab aus Stahl ist.

10. Schnalle (10) nach einem der vorhergehenden Ansprüche, welche ausserdem aufweist:
eine erste Oberfläche (16), um welche im Gebrauch ein Arbeitsende (22) eines flexiblen Frachtgurtes (14) herum gewickelt werden kann; und
eine zweite Oberfläche (32), gegen welche im Gebrauch das Arbeitsende mittels Spannung in der Biegung des Gurtes gepresst werden kann; wobei
die erste und/oder die zweite Oberfläche mittels eines Kornmaterials (18), wie zuvor erwähnt, beschichtet ist.

11. Schnalle (10) nach Anspruch 10, bei welcher die Schnalle ausserdem aufweist:
eine mit der ersten Oberfläche (16) korrespondierende dritte Oberfläche (16), um welche im Gebrauch das andere Arbeitsende eines Gurtes (14) herum gewickelt werden kann; und
eine mit der zweiten Oberfläche (32) korrespondierende vierte Oberfläche (32), gegen welche im Gebrauch das andere Arbeitsende gepresst werden kann; wobei
die dritte und/oder die vierte Oberfläche mittels eines Kornmaterials (18), wie zuvor erwähnt, beschichtet ist.

12. Frachtgurt-Anordnung, welche aufweist:
einen flexiblen Frachtgurt (14) zum Herumlegen um die Fracht (12); und
eine Schnalle (10), wie sie in einem der vorhergehenden Ansprüche definiert ist, zum Befestigen der Enden des Frachtgurtes aneinander.

13. Frachtgurt-Anordnung nach Anspruch 12 oder 13, bei welcher der Gurt (14) gewebt ist.

14. Frachtgurt-Anordnung nach Anspruch 12 oder 13, bei welcher der Gurt (14) extrudiert ist.

15. Frachtgurt-Anordnung nach einem der Ansprüche 12 bis 15, bei welcher der Gurt (14) ein Kunststoff bzw. ein synthetisches Plastikmaterial ist.

## Revendications

1. Boucle (10) pour une sangle de chargement (14) flexible, comprenant :
au moins une surface (16) contre laquelle la courroie s'appuie, lors de son utilisation, et dans laquelle la surface est recouverte d'un matériau granuleux (18).

2. Boucle (10) selon la revendication 1, dans laquelle la surface recouverte (16) présente un revêtement adhésif au moyen duquel le matériau granuleux (18) est fixé à la surface recouverte.

3. Boucle (10) selon la revendication 2, dans laquelle le revêtement adhésif est un adhésif à base d'eau.

4. Boucle (10) selon l'une quelconque des revendications précédentes, dans laquelle la surface recouverte (16) est recouverte par un revêtement abrasif contenant un matériau granuleux (18).

5. Boucle (10) selon l'une quelconque des revendications précédentes, dans laquelle le matériau granuleux (18) est du grain abrasif.

6. Boucle (10) selon l'une quelconque des revendications précédentes, dans laquelle le matériau granuleux est du carbure de tungstène, du diamant, du verre broyé, du sable, de la poudre de silice, de l'oxyde d'aluminium, de la pierre ponce ou de l'oxyde de fer.

7. Boucle (10) selon l'une quelconque des revendications précédentes, dans laquelle la surface recouverte (16) est prévue le long de la surface d'une longueur de tige de métal.

8. Boucle (10) selon la revendication 7, dans laquelle la tige de métal est pliée pour former la boucle.

9. Boucle (10) selon la revendication 7 ou 8, dans laquelle la tige de métal est en acier.

10. Boucle (10) selon l'une quelconque des revendications précédentes, comprenant en outre :
une première surface (16) autour de laquelle une extrémité de travail (22) d'une courroie de chargement (14) souple peut être enroulée, lors de son utilisation, et,
une seconde surface (32) contre laquelle l'extrémité de travail peut être pressée,
lors de son utilisation, par tension dans la boucle de la sangle,
une seule, ou les première et seconde surfaces à la fois étant recouvertes de matériau granuleux (18), de la manière susmentionnée.

11. Boucle (10) selon la revendication 10, dans laquelle la boucle comprend en outre une troisième surface (16) correspondant à la première surface (16), autour de laquelle l'autre extrémité de travail d'une bande peut être enroulée, lors de son utilisation, et une quatrième surface (32) correspondant à la seconde surface (32), contre laquelle l'autre extrémité de travail peut être pressée, lors de son utilisation, et dans laquelle l'une ou l'autre des troisième et quatrième surfaces sont revêtues de matériau granuleux (18), de la manière susmentionnée.

12. Dispositif de sanglage d'un chargement, comprenant :
une sangle de chargement (14) flexible destinée à passer autour du chargement (12),
et une boucle (10) selon l'une quelconque des revendications précédentes,
destinée à fixer ensemble les extrémités de la sangle de chargement.

13. Dispositif de sanglage d'un chargement selon la revendication 12 ou 13, dans lequel la sangle (14) est tissée.

14. Dispositif de sanglage d'un chargement selon la revendication 12 ou 13, dans lequel la sangle (14) est extrudée.

15. Dispositif de sanglage d'un chargement selon l'une quelconque des revendications 12 à 15, dans lequel la sangle (14) est un matériau de plastique synthétique.
